(19) Europäisches Patentamt
European Patent Office
Office européen des brevets

(11) **EP 4 611 061 A1**

(12) **EUROPEAN PATENT APPLICATION**
published in accordance with Art. 153(4) EPC

(43) Date of publication:
**03.09.2025 Bulletin 2025/36**

(21) Application number: **23929427.5**

(22) Date of filing: **31.03.2023**

(51) International Patent Classification (IPC):
**H01M 4/36** (2006.01)        **H01M 4/134** (2010.01)
**H01M 10/0525** (2010.01)

(52) Cooperative Patent Classification (CPC):
**H01M 4/134; H01M 4/36; H01M 10/0525;**
**Y02E 60/10**

(86) International application number:
**PCT/CN2023/085564**

(87) International publication number:
**WO 2024/197842 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
(Hong Kong) Limited
Hong Kong (HK)**

(72) Inventors:
• **LIU, Jing**
  **Ningde, Fujian 352100 (CN)**
• **XU, Ningbo**
  **Ningde, Fujian 352100 (CN)**
• **CHEN, Peipei**
  **Ningde, Fujian 352100 (CN)**

(74) Representative: **Jacob, Reuben Ellis et al
Maucher Jenkins
Seventh Floor Offices
Artillery House
11-19 Artillery Row
London SW1P 1RT (GB)**

(54) **SECONDARY BATTERY AND ELECTRIC DEVICE**

(57)     The present application provides a secondary battery (1). The secondary battery (1) comprises: a negative electrode sheet and an electrolyte, wherein the negative electrode sheet comprises a silicon-carbon composite material having a three-dimensional network crosslinked pore structure; and the electrolyte comprises dimethyl carbonate. By means of the cooperation of the three-dimensional network crosslinked pore structure of the silicon-carbon composite material and dimethyl carbonate in the electrolyte, the volume effect of an active material during a charging and discharging process is inhibited, the interface stability is improved, the internal resistance of the battery is reduced, and the cycle capacity retention rate and the charging and discharging performance at a high rate of the battery are improved.

FIG. 1

EP 4 611 061 A1

# EP 4 611 061 A1

## Description

TECHNICAL FIELD

The present application relates to the technical field of secondary batteries, and in particular, to a battery cell and an electric device.

BACKGROUND

Recently, a secondary battery is widely applied in an energy storage power system, such as a hydraulic, thermal, wind, or solar power plant, etc., and the fields of a power tool, an electric bicycle, an electric motorcycle, an electric vehicle, military equipment, aerospace, or the like.

Electrode active materials with high gram capacities tend to be poor in cycle performance and kinetic performance, and to achieve both excellent cycle performance and kinetic performance while increasing the energy density of batteries through coordination of the components of the batteries is an urgent technical issue to be solved in the art.

SUMMARY

The present application has been made in view of the above-described problems, and an object thereof is to provide a secondary battery. By matching the electrolyte with the negative electrode material, the volume effect of the active material during charge and discharge is suppressed, the interface stability is improved, the internal resistance of the battery is reduced, and the cycle capacity retention ratio and rate performance of the battery are improved.

A first aspect of the present application provides a secondary battery, including a negative electrode and an electrolyte. The negative electrode includes a silicon-carbon composite material having a three-dimensional network cross-linked pore structure; and the electrolyte includes dimethyl carbonate.

The silicon-carbon composite material having a three-dimensional network cross-linked pore structure has a stable porous skeleton and good mechanical strength, and can effectively reduce the volume change of silicon before and after charging and discharging while loading a high silicon content. Moreover, dimethyl carbonate blended in the electrolyte may increase the reflux rate of the electrolyte during charge and discharge, promote ion transport at an active material/electrolyte interface, and effectively reduce the polarization resistance of the battery, thereby improving the cycle performance and rate performance of the battery.

In any embodiment, a pore volume per unit mass of the silicon-carbon composite material is Vm, with a unit of $cm^3/g$; based on the total mass of the electrolyte, a mass ratio of the dimethyl carbonate in the electrolyte is EL g/g; and a ratio EL: Vm between the pore volume Vm of the silicon-carbon composite material and the mass ratio EL of the dimethyl carbonate in the electrolyte is 0.5-20, preferably 2-13.

When the ratio EL: Vm between the pore volume Vm of the silicon-carbon composite material and the mass ratio EL of dimethyl carbonate in the electrolyte satisfies the above range, the amount of dimethyl carbonate added and the pore volume Vm of the silicon-carbon composite material can match with each other, so that the cycle capacity retention ratio of the battery is improved, and the rate performance of the battery is improved.

In any embodiment, the pore volume Vm per unit mass of the silicon-carbon composite material is 0.01-0.3 $cm^3/g$, optionally 0.04-0.15 $cm^3/g$.

When the pore volume Vm per unit mass of the silicon-carbon composite material is within the above range, dimethyl carbonate, which is a small molecule, easily enters into the pore structure of the silicon-carbon composite material and cooperates therewith, so that the internal resistance of the battery is reduced, and the cycle performance of the battery is improved.

In any embodiment, based on the total mass of the electrolyte, the mass ratio of the dimethyl carbonate in the electrolyte is EL g/g, a specific surface area of the silicon-carbon composite material is SSA, and EL: SSA is 0.01-0.5, optionally 0.05-0.25.

When the ratio EL: SSA between the mass ratio of dimethyl carbonate in the electrolyte and the specific surface area SSA of the silicon-carbon composite satisfies the above range, dimethyl carbonate may efficiently enter into the pore structure of the silicon-carbon composite, and sufficiently contact with the silicon-carbon composite, so that the migration rate of ions at the electrode/electrolyte interface is improved, the internal resistance of the battery is reduced, the cycle performance and high-rate capacity of the battery are improved.

In any embodiments, the specific surface area SSA of the silicon-carbon composite material is 2-10 $m^2/g$, optionally 3-7 $m^2/g$.

When the specific surface area SSA of the silicon-carbon composite material satisfies the above range, the specific surface area of the silicon-carbon composite material is large, and the dynamic performance and rate performance of the secondary battery are high.

In any embodiment, based on the total mass of the electrolyte, the mass ratio of the dimethyl carbonate in the electrolyte is EL g/g, a total pore volume of pores having a pore diameter less than or equal to 100 nm in the silicon-carbon composite material is V1 cm$^3$/g, and a ratio EL: V1 between the mass ratio EL of the dimethyl carbonate in the electrolyte and the total pore volume V1 of pores having a pore diameter less than or equal to 100 nm in the silicon-carbon composite material is 10-200, optionally 30-120.

Dimethyl carbonate, which is a small molecule, easily enters into the pore structure of the silicon-carbon composite material, and cooperates therewith to further increase the ion migration rate in the electrode active material, thereby improving the cycle performance and rate performance of the battery.

In any embodiment, the silicon-carbon composite material includes carbon matrix particles, the carbon matrix particles having the three-dimensional network cross-linked pore structure; and silicon nanoparticles, the silicon nanoparticles at least partially embedded into the three-dimensional network cross-linked pore structure of the carbon matrix particles.

The carbon matrix in the present application has a stable porous skeleton structure, has a strong supporting ability, exhibits a high stress ability, and has excellent mechanical properties and electrical conductivity, and the carbon matrix includes a three-dimensional network cross-linked pore structure, has a large space for embedding silicon-based nanoparticles, may be used for storing silicon in a large amount, and effectively increases the loading capacity of silicon in the silicon-carbon composite material. After the carbon matrix is composited with the silicon-based nanoparticles, the conductivity of the silicon-carbon composite material may be improved, the volume effect of silicon during the process of intercalating and deintercalating lithium is alleviated, and the silicon-carbon composite material can sufficiently withstand the stress change of the silicon-based nanoparticles, the structural stability of the silicon-carbon composite material is ensured, the cycle stability and the lithium storage capacity of the silicon-carbon composite material are improved. Therefore, when the silicon-carbon composite material is applied to the secondary battery, the cycle performance and energy density of the secondary battery can be improved.

In any embodiment, a mass ratio of the silicon nanoparticles in the silicon-carbon composite material is greater than or equal to 40%, optionally 40-60%.

The negative electrode material used in the secondary battery provided by the present application realizes a high loading capacity of silicon nanoparticles in the negative electrode material by using the carbon-based material having the three-dimensional network cross-linked pore structure, so that the silicon-carbon composite material has a high capacity, which can further increase the energy density of the battery.

In any embodiment, the silicon nanoparticles include one or more of a silicon oxide compound, pre-lithium silicon oxide compound, amorphous silicon, crystalline silicon, and a silicon-carbon composite.

In any embodiment, the carbon matrix includes one or more of graphite, soft carbon, and hard carbon.

When the above material is prepared into a porous structure, it is advantageous that the silicon-based nanoparticles are embedded into the pores of the porous structure, and its structural stability is relatively high.

In any embodiment, the total volume of pores having a pore diameter greater than 100 nm in the carbon matrix particles is denoted by Vc1 cm$^3$/g, the total volume of pores having a pore diameter less than or equal to 100 nm in the carbon matrix particles is denoted by Vc2 cm$^3$/g, the carbon matrix particles satisfy: 1<Vc2/Vc1≤30, optionally 3≤Vc2/Vc1≤25.

By regulating the total pore volume proportion of pores of a specific size in the porous carbon matrix particles, the pore size distribution of the carbon matrix particles can be made moderate, facilitating the entry of the silicon nanoparticles into the pores of the carbon matrix particles, and the specific surface area of the silicon-carbon composite particles can be made moderate, improving the reversible capacity thereof.

In any embodiment, a ratio of a powder compact density P11 g/cm$^3$ of the silicon-carbon composite material tested after powder compaction for one time under an acting force of 20,000 N to a compact density P21 g/cm$^3$ of the silicon-carbon composite material tested after powder compaction for 20 times at an acting force of 20,000 N satisfies 1.00<P21/P11≤1.20, optionally 1.02≤P21/P11≤1.10.

When the ratio of P21/P11 satisfies the above range, the silicon-carbon composite material has better compression resistance while having a higher gram capacity, and the structural stability of the negative electrode film layer is improved, so that the secondary battery containing the material has better cycle performance while having a higher energy density.

In any embodiment, the powder compact density P11 g/cm$^3$ of the silicon-carbon composite material tested after powder compaction for one time under the acting force of 20,000 N satisfies 1.10≤P11≤1.40, optionally 1.12≤P11≤1.35.

When the powder compact density P11 g/cm$^3$ of the silicon-carbon composite material tested after powder compaction for one time under the acting force of 20,000 N satisfies the above range, the negative electrode film layer has a higher compact density, so that the secondary battery has a higher energy density.

In any embodiment, a conductivity of the electrolyte is 8-12 ms/cm, optionally 9-11 ms/cm.

When the conductivity of the electrolyte is within the above range, the migration rate of ions in the electrolyte can be ensured, and the cycle performance and cycle efficiency of the battery can be improved.

In any embodiment, the secondary battery includes at least one of a lithium ion battery, a sodium ion battery, a magnesium ion battery, and a potassium ion battery.

A second aspect of the present application provides an electric device, including the secondary battery in the first aspect.

DESCRIPTION OF DRAWINGS

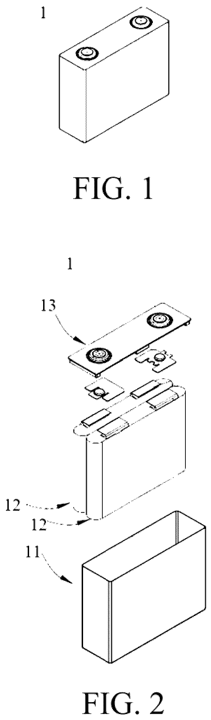

FIG. 1 is a schematic diagram of a secondary battery according to an embodiment of the present application;

2 is an exploded view of the secondary battery according to an embodiment of the present application shown in FIG. 1; and

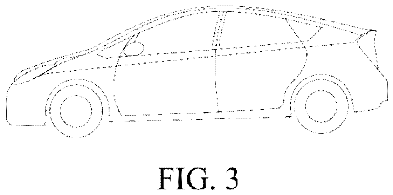

FIG. 3 is a schematic diagram of an electric device using a secondary battery as a power supply according to an embodiment of the present application.

Description of reference signs:

1, secondary battery; 11, housing; 12, electrode assembly; 13, cover plate.

DESCRIPTION OF EMBODIMENTS

The embodiments of an adhesive, a preparation method, an electrode, a battery, and an electric device of the present application are described in detail below with dereference to the drawings as appropriate. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit subject matters described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer $\geq 2$, it is equivalent to disclosing that the parameter is an integer such as 2, 3, 4, 5, 6, 7, 8, 9, 10, 11, or 12.

Unless otherwise specified, all embodiments and optional embodiments of this application may be combined with each other to form new technical solutions.

Unless otherwise specified, all technical features and optional technical features of this application can be combined with each other to form new technical solutions.

Unless otherwise specified, all steps in this application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

Unless otherwise specified, the terms "including" and "containing" as used herein are meant to be open or closed. For example, the "including" and "containing" may mean that other components not listed may be further included or contained, or only the listed components may be included or contained.

In this application, the term "or" is inclusive, unless specifically stated otherwise. For example, the phrase "A or B" means "A, B, or both A and B". More specifically, the condition "A or B" is satisfied by either A being true (or present) and B being false (or absent), A being false (or absent) and B being true (or present), or both A and B being true (or present).

With the popularization of the application range of the secondary battery, the requirements for the performance of the secondary battery such as energy density are gradually increasing. The silicon-based material has a high capacity and is a negative electrode material suitable for high energy density batteries. However, the silicon-based material has a large volume expansion rate during charge and discharge, resulting in poor cycle performance of the battery, and the solid electrolyte interface film (SEI film) on the surface of the silicon-based material is continuously and repeatedly regenerated as the silicon-based material expands, thereby increasing the internal resistance of the battery and reducing the dynamic performance.

Based on this, the present application provides a secondary battery, including a negative electrode and an electrolyte. The negative electrode includes a silicon-carbon composite material having a three-dimensional network cross-linked pore structure; and the electrolyte includes dimethyl carbonate.

In the present application, the three-dimensional network cross-linked pore structure generally refers to a structure in which two or more pores are present in communication with each other and a pore volume is shared with each other in a silicon-carbon composite material, particularly in a pore structure formed by carbon matrix particles.

The pore structure of the silicon-carbon composite can be tested using devices and methods known in the art. For example, it can be tested by using a scanning electron microscope (e.g., ZEISS Sigma 300). As an example, it can be tested according to the following steps: the negative electrode including the silicon-carbon composite material is first cut into a sample to be tested of a certain size (for example, 6 mm×6 mm), the sample to be tested is sandwiched between two sheets of electrically and thermally conductive sheets (for example, a copper foil), the sample to be tested and the sheets are adhered and fixed with an adhesive (for example, a double-sided tape), and the sample to be tested is pressed by a flat iron block of a certain mass (for example, about 400 g) for a certain period of time (for example, 1 h), to make the gap between the sample to be tested and the copper foil as small as possible, and then the edge is cut with a pair of scissors and adhered to a sample stage with an electrically conductive adhesive with the sample protruding slightly from the edge of the sample stage. The sample stage is then loaded into a sample holder and locked in place, a power supply of an argon ion section polisher (e.g., IB-19500CP) is turned on and vacuumizing (e.g., 10 Pa to 4 Pa) is performed, an argon flow (e.g., 0.15 MPa) and a voltage (e.g., 8 KV) and polishing time (e.g., 2 h) are set, the sample stage is set to a rocking mode to begin polishing, and after the polishing is complete, a scanning electron microscope (e.g., ZEISS Sigma 300) is used to obtain an ion polished cross-sectional topography (CP) picture of the sample to be tested.

The silicon-carbon composite material having a three-dimensional network cross-linked pore structure has a stable porous skeleton and good mechanical strength, and can effectively reduce the volume change of silicon before and after charging and discharging while loading a high silicon content. Moreover, dimethyl carbonate can increase the reflux rate of the electrolyte during charge and discharge, facilitate ion transport at an active material/electrolyte interface, reduce interface deterioration due to polarization, improve the cycle performance of the battery and the charge and discharge capacity under a high rate condition.

In some embodiments, the pore volume of the silicon-carbon composite is Vm cm$^3$ g, and Vm is defined by the formula: $Vm = \dfrac{1}{\rho \, true} \times \dfrac{\alpha}{1-\alpha}$, where $\rho_{true}$ represents the true density of the silicon-carbon composite material, $\alpha$ represents the porosity of the silicon-carbon composite material; the mass ratio of dimethyl carbonate in the electrolyte is ELg/g, the ratio EL: Vm between the pore volume Vm of the silicon-carbon composite material and the mass ratio EL of dimethyl carbonate in the electrolyte is 0.5-20, preferably 2-13.

In some embodiments, the ratio EL between the pore volume Vm of the silicon-carbon composite and the mass ratio EL of dimethyl carbonate in the electrolyte may optionally be 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.5, 3, 3.5, 4, 4.5, 5, 5.5, 6, 6.5, 7, 7.5, 8, 8.5, 9, 9.5, 10, 11, 12, 13, 14, 15, 16, 17, 18, 19 or 20.

The pore volume Vm of the silicon-carbon composite material can be calculated by the following formula: $Vm = \dfrac{1}{\rho \, true} \times \dfrac{\alpha}{1-\alpha}$, where $\rho_{true}$ represents the true density of the silicon-carbon composite material, and $\alpha$ represents the porosity of the silicon-carbon composite material. Porosity refers to the ratio of the volume of pores within a particle to the total volume of the carbon matrix particle. Porosity can be measured by gas displacement according to GB/T24586. Porosity W=(L1-L2)/L1*100%, where L1 is the apparent volume of the sample and L2 is the true volume of the sample. True density is well-known meaning in the art that refers to the actual mass of a solid substance per unit volume of a material in an absolutely dense state, i.e., the density after removal of voids within the material or voids between particles. The true density may be tested by using instruments and methods known in the art. For example, reference can be made to GB/T 24586 2009 for the test method, and a true density tester can be used as the test instrument. As an example, it can be tested according to the following steps: a clean dry sample cup is placed on a balance and cleared to zero, a certain amount of powder sample is added into the sample cup (e.g., the sample can account for 1/2 of the volume of the sample cup), the mass of the sample taken is recorded, the sample cup containing the sample is placed in a true density tester for close testing, helium is introduced, the pressures of the gases in a sample chamber and an expansion chamber are detected, and the true volume is then calculated according to Bohr's law, and thus, the true density is calculated.

When the ratio EL: Vm between the pore volume Vm of the silicon-carbon composite material and the mass ratio EL of dimethyl carbonate in the electrolyte satisfies the above range, the amount of dimethyl carbonate added and the pore volume Vm of the silicon-carbon composite material can match with each other, so that the cycle capacity retention ratio of the battery is improved, and the rate performance of the battery is improved.

In some embodiments, the pore volume Vm per unit mass of the silicon-carbon composite material is 0.01-0.3 cm$^3$/g, optionally 0.04-0.15 cm$^3$/g.

In some embodiments, the pore volume Vm per unit mass of the silicon-carbon composite material may optionally be 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.3 cm$^3$/g.

When the pore volume Vm per unit mass of the silicon-carbon composite material is within the above range, dimethyl carbonate, which is a small molecule, easily enters into the pore structure of the silicon-carbon composite material and cooperates therewith, so that the internal resistance of the battery is reduced, and the cycle performance of the battery is improved.

In some embodiments, the ratio EL: SSA between the mass ratio of the dimethyl carbonate in the electrolyte and the specific surface area SSA of the silicon-carbon composite material is 0.01-0.5, optionally 0.05-0.25.

In some embodiments, the mass fraction of the dimethyl carbonate in the electrolyte is EL g/g based on the total mass of the electrolyte, and the specific surface area of the silicon-carbon composite is SSA, EL : SSA may be optionally 0.01, 0.02, 0.03, 0.04, 0.05, 0.06, 0.07, 0.08, 0.09, 0.1, 0.15, 0.2, 0.25, 0.3, 0.35, 0.4, 0.45, or 0.5.

In the present application, the specific surface area SSA is known meaning in the art, is usually represented by m$^2$/g, and can be tested by using methods and instruments known in the art. For example, with reference to GB/T 19587-2017, the specific surface area can be obtained by using a specific surface area testing method with nitrogen adsorption and using the BET (Brunauer Emmett Teller) method for calculation, where the specific surface area testing method with nitrogen adsorption can be performed by a Tri-Star 3020 Specific Surface Area Pore Size Analysis Tester from Micromeritics, USA.

When the ratio EL: SSA between the mass ratio of dimethyl carbonate in the electrolyte and the specific surface area SSA of the silicon-carbon composite satisfies the above range, dimethyl carbonate may efficiently enter into the pore structure of the silicon-carbon composite, and sufficiently contact with the silicon-carbon composite, so that the migration rate of ions at the electrode/electrolyte interface is improved, the internal resistance of the battery is reduced, the cycle performance and high-rate capacity of the battery are improved.

In some embodiments, the specific surface area SSA of the silicon-carbon composite material is 2-10 m$^2$/g, optionally 3-7 m$^2$/g.

The specific surface area SSA of the silicon-carbon composite can optionally be 2 m$^2$/g, 3 m$^2$/g, 4 m$^2$/g, 5 m$^2$/g, 6 m$^2$/g, 7 m$^2$/g, 8 m$^2$/g, 9 m$^2$/g, or 10 m$^2$/g, or a range consisting of any two of the above values.

When the specific surface area SSA of the silicon-carbon composite material satisfies the above range, the specific surface area of the silicon-carbon composite material is large, the kinetic performance of the material is good, and it is advantageous to improve the first coulombic rate of the battery.

In some embodiments, based on the total mass of the electrolyte, the mass ratio of the dimethyl carbonate in the electrolyte is EL g/g, a total pore volume of pores having a pore diameter less than or equal to 100 nm in the silicon-carbon composite material is V1 cm$^3$/g, and a ratio EL: V1 between the mass ratio EL of the dimethyl carbonate in the electrolyte and the total pore volume V1 of pores having a pore diameter less than or equal to 100 nm in the silicon-carbon composite material is 10-200, optionally 30-120.

With reference to GB/T 19587 to 2004, the pore volume of pores of different sizes can be measured by the pore size distribution test BJH(Barret joyner Halenda), the adsorption branch data are selected by the gas adsorption/desorption method under a micro-mesoporous model, and the total pore volume V1 of pores with a pore size less than or equal to 100 nm is measured and counted.

In some embodiments, the ratio EL: V1 between the mass ratio EL of dimethyl carbonate in the electrolyte and the total pore volume V1 of pores with a pore size less than or equal to 100 nm in the silicon-carbon composite material may optionally be 10, 15, 20, 25, 30, 35, 40, 45, 50, 55, 60, 65, 70, 75, 80, 85, 90, 95, 100, 110, 120, 130, 140, 150, 160, 170, 180, 190, or 200.

Dimethyl carbonate, which is a small molecule, easily enters into the pore structure of the silicon-carbon composite material, and cooperates therewith to further increase the ion migration rate in the electrode active material, thereby improving the cycle performance and rate performance of the battery.

In some embodiments, the V1 of the silicon-carbon composite material is ≥0.001 cm$^3$/g, optionally 0.005-0.01 cm$^3$/g.

In some embodiments, the V1 of the silicon-carbon composite may optionally be 0.005, 0.006, 0.007, 0.008, 0.009, or 0.01 cm$^3$/g.

When the V1 of the silicon-carbon composite is within the above range, dimethyl carbonate, which is a small molecule, easily enters into the pore structure of the silicon-carbon composite, and cooperates therewith to further increase the migration rate of ions in the electrode active material, thereby improving the cycle performance and rate performance of the battery.

In some embodiments, the silicon-carbon composite includes carbon matrix particles having a three-dimensional network cross-linked pore structure, and silicon nanoparticles at least partially embedded into the three-dimensional network cross-linked pore structure of the carbon matrix particles.

The carbon matrix in the present application has a stable porous skeleton structure, has a strong supporting ability, exhibits a high stress ability, and has excellent mechanical properties and electrical conductivity, and the carbon matrix includes a three-dimensional network cross-linked pore structure, has a large space for embedding silicon-based nanoparticles, may be used for storing silicon in a large amount, and effectively increases the loading capacity of silicon in the silicon-carbon composite material. After the carbon matrix is composited with the silicon-based nanoparticles, the conductivity of the silicon-carbon composite material may be improved, the volume effect of silicon during the process of intercalating and deintercalating lithium is alleviated, and the silicon-carbon composite material can sufficiently withstand the stress change of the silicon-based nanoparticles, the structural stability of the silicon-carbon composite material is ensured, the cycle stability and the lithium storage capacity of the silicon-carbon composite material are improved. Therefore, when the silicon-carbon composite material is applied to the secondary battery, the cycle performance and energy density of the secondary battery can be improved.

In some embodiments, a mass ratio of the silicon nanoparticles in the silicon-carbon composite material is greater than or equal to 40%, optionally 40-60%.

In some embodiments, the mass ratio of the silicon nanoparticles in the silicon-carbon composite may optionally be 40%, 45%, 50%, 55%, or 60%.

The mass of the silicon nanoparticles in the silicon-carbon composite material can be measured by using methods and devices known in the art, for example, can be measured with reference to EPA 6010D-2014 standard, and specifically, measured by using Elemental Analysis-Inductively Coupled Plasma Optical Emission Spectroscopy (ICP-OES), where a solid to be tested is first dissolved in a strong acid to form a liquid, the liquid is then introduced into an ICP light source by means of atomization, and the gaseous atoms to be tested are ionized and excited in a strong magnetic field and then returned from an excited state to a ground state; and in the above process, energy is released and recorded as different characteristic lines to perform quantitative analysis of trace elements.

The negative electrode material used in the secondary battery provided by the present application realizes a high loading capacity of silicon nanoparticles in the negative electrode material by using the carbon-based material having the three-dimensional network cross-linked pore structure, so that the silicon-carbon composite material has a high capacity, which can further increase the energy density of the battery.

In some embodiments, the silicon nanoparticles include one or more of a silicon oxide compound, a pre-lithium silicon oxide compound, amorphous silicon, crystalline silicon, and a silicon-carbon composite.

In some embodiments, the carbon matrix includes one or more of graphite, soft carbon, and hard carbon.

When the above material is prepared into a porous structure, it is advantageous that the silicon-based nanoparticles are embedded into the pores of the porous structure, and its structural stability is relatively high.

In some embodiments, in a peripheral region of the silicon-carbon composite material, a mass percentage content A1 of the carbon element of the silicon-carbon composite material with respect to the total mass of the silicon-carbon composite material and a mass percentage content B1 of the silicon element of the silicon-carbon composite material with respect to the total mass of the silicon-carbon composite material satisfies $0.8 \leqq B1/A1 \leqq 2.5$, optionally $1 \leqq B1/A1 \leqq 1.5$, where the peripheral region of the silicon-carbon composite material is a region extending from an outer surface of the silicon-carbon composite material into an interior of the silicon-carbon composite material by a distance within r/2, r representing a minor axis of the silicon-carbon composite material.

The amount of the silicon element can be determined by an Inductively Coupled Plasma (ICP) method, specifically as follows: the silicon-carbon composite material is taken as a sample, the sample is digested with aqua regia and HF, the digested solution for 15 minutes and the completely digested solution are taken for ICP testing, the amount of Si in the digested solution for 45 minutes is the amount of Si in the "peripheral region of the silicon-carbon composite material".

The content of the carbon element can be tested according to the GB / T 20123-2006 test standard by means of the analysis of the carbon-sulfur content by an infrared absorption method, specifically as follows: the silicon-carbon composite material is taken as a sample, and the carbon content at the time of 20 minutes of the test is the carbon content of the "peripheral region of the silicon-carbon composite material".

When A1 and B1 satisfy the above ranges, the mass of the silicon nanoparticles attached to the interior of the carbon matrix particles is relatively high, so that the capacity of the anode active material can be significantly increased, and the voltage at which the metal ions are intercalated is low, so that the intercalation of the metal ions is facilitated, thereby further increasing the capacity retention rate when the secondary battery is charged and discharged at a high rate.

In some embodiments, the total volume of pores having a pore diameter greater than 100 nm in the carbon matrix particles is denoted by Vc1 $cm^3/g$, the total volume of pores having a pore diameter less than or equal to 100 nm in the carbon matrix particles is denoted by Vc2 $cm^3/g$, the carbon matrix particles satisfy: $1 < Vc2/Vc1 \leqq 30$, optionally

3≤Vc2/Vc1≤25.

By regulating the total pore volume proportion of pores of a specific size in the porous carbon matrix particles, the pore size distribution of the carbon matrix particles can be made moderate, facilitating the entry of the silicon nanoparticles into the pores of the carbon matrix particles, and the specific surface area of the silicon-carbon composite particles can be made moderate, improving the reversible capacity thereof.

In some embodiments, a ratio of a powder compact density P11 g/cm³ of the silicon-carbon composite material tested after powder compaction for one time under an acting force of 20,000 N to a compact density P21 g/cm³ of the silicon-carbon composite material tested after powder compaction for 20 times at an acting force of 20,000 N satisfies 1.00<P21/P11≤1.20, optionally 1.02≤P21/P11≤1.10.

When the ratio of P21/P11 satisfies the above range, the silicon-carbon composite material has better compression resistance while having a higher gram capacity, and the structural stability of the negative electrode film layer is improved, so that the secondary battery containing the material has better cycle performance while having a higher energy density.

In some embodiments, the powder compact density P11 g/cm³ of the silicon-carbon composite material tested after powder compaction for one time under an acting force of 20,000 N satisfies 1.10≤P11≤1.40, optionally 1.12≤P11≤1.35.

When the powder compact density P11 g/cm³ of the silicon-carbon composite material tested after powder compaction for one time under the acting force of 20,000 N satisfies the above range, the negative electrode film layer has a higher compact density, so that the secondary battery has a higher energy density.

In some embodiments, a conductivity of the electrolyte is 8-12 ms/cm, optionally 9-11 ms/cm.

In some embodiments, the conductivity of the electrolyte may optionally be 8, 9, 10, 11, or 12 ms/cm.

When the conductivity of the electrolyte is within the above range, the migration rate of ions in the electrolyte can be ensured, and the cycle performance and cycle efficiency of the battery can be improved.

In some embodiments, the secondary battery includes a negative electrode. The negative electrode includes a negative electrode current collector and a negative electrode film layer disposed on at least one surface of the negative electrode current collector. The negative electrode film layer includes a negative electrode active material.

As an example, the negative electrode current collector has two surfaces opposite in its own thickness direction, and the negative electrode film layer is disposed on either one or both of the two opposite surfaces of the negative electrode current collector.

In some embodiments, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some implementations, the negative electrode film layer optionally further includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes another auxiliary agent, for example, a thickening agent (e.g., sodium carboxymethyl cellulose (CMC-Na)).

In some embodiments, the negative electrode sheet may be prepared in the following manner: dispersing the above-mentioned components for preparing the negative electrode sheet, for example, the negative electrode active material, the conductive agent, the binder, and any other component in a solvent (e.g., deionized water) to form a negative electrode slurry; and coating the negative electrode slurry on the negative electrode current collector, and performing procedures such as drying and cold pressing, to obtain the negative electrode sheet.

In some embodiments, the secondary battery includes a positive electrode. The positive electrode includes a positive electrode current collector and a positive electrode film layer disposed on at least one surface of the positive electrode current collector. The positive electrode film layer includes the positive electrode active material in the first aspect of the present application.

As an example, the positive electrode current collector has two surfaces opposed in its own thickness direction, and the positive electrode film layer is provided on either one or both of the two opposed surfaces of the positive electrode current collector.

In some embodiments, the positive electrode current collector can use a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some embodiments, the positive electrode active material can use a positive electrode active material for a secondary battery known in the art. As an example, the positive electrode active material may include at least one of olivine-structured lithium-containing phosphate, lithium-transition metal oxide, and their respective modifying compounds. However, the present application is not limited to these materials, and other conventional materials that can be used as a positive electrode active material of a battery may also be used. These positive electrode active materials may be used alone or in combination of two or more thereof. Among them, examples of the lithium transition metal oxide may include, but are not limited to, at least one of lithium cobalt oxide (e.g., $LiCoO_2$), lithium nickel oxide (e.g., $LiNiO_2$), lithium manganese oxide (e.g., $LiMnO_2$ or $LiMn_2O_4$), lithium nickel cobalt oxide, lithium manganese cobalt oxide, lithium nickel manganese oxide, lithium nickel cobalt manganese oxide (e.g., $LiNi_{1/3}Co_{1/3}Mn_{1/3}O_2$ (also simply referred to as $NCM_{333}$), $LiNi_{0.5}Co_{0.2}Mn_{0.3}O_2$ (also simply referred to as $NCM_{523}$), $LiNi_{0.5}Co_{0.25}Mn_{0.25}O_2$ (also simply referred to as $NCM_{211}$), $LiNi_{0.6}Co_{0.2}Mn_{0.2}O_2$ (also simply referred to as $NCM_{622}$), $LiNi_{0.8}Co_{0.1}Mn_{0.1}O_2$ (also simply referred to as $NCM_{811}$)), lithium nickel cobalt aluminum oxide (e.g., $LiNi_{0.85}Co_{0.15}Al_{0.05}O_2$), modifying compounds thereof, and the like. Examples of the olivine-structured lithium-containing phosphate may include, but are not limited to, at least one of lithium iron phosphate (e.g., $LiFePO_4$ (which may also be simply referred to as LFP)), a composite of lithium iron phosphate and carbon, lithium manganese phosphate (e.g., $LiMnPO_4$), a composite material of lithium manganese phosphate and carbon, lithium ferro-manganese phosphate, and a composite material of lithium ferro-manganese phosphate and carbon.

In some embodiments, the positive active material is a nickel-rich material, and the molar proportion of nickel element in the positive active material transition metal is greater than 85%.

In some implementations, the positive electrode film layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some implementations, the positive electrode film layer further optionally includes a conductive agent. As an example, the conductive agent may include at least one of superconducting carbon, acetylene black, carbon black, ketjen black, carbon dots, carbon nanotubes, graphene, and carbon nanofibers.

In some implementations, the positive electrode tab may be prepared by dispersing the above components for preparing a positive electrode tab, for example, a positive electrode active material, a conductive agent, a binder, and any other components in a solvent (for example, N-methylpyrrolidone) to form a positive electrode slurry, and applying the positive electrode slurry to a positive electrode current collector, followed by drying, cold pressing, and the like.

In some embodiments, the secondary battery further includes a separator. The type of the separator is not particularly limited in this application, and any well-known porous separator with good chemical stability and mechanical stability may be used.

In some embodiments, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some embodiments, the secondary battery includes at least one of a lithium ion battery, a sodium ion battery, a magnesium ion battery, and a potassium ion battery.

In one embodiment of the present application, provided is an electric device, including the secondary battery in any embodiments.

The shape of the secondary battery is not limited in this application, and may be a cylindrical shape, a square shape, or any other shape. For example, FIG. 1 shows a secondary battery 1 of a square structure as an example.

In some embodiments, referring to FIG. 2, the outer package may include a housing 11 and a cover plate 13. The housing 11 may include a bottom plate and side plates connected to the bottom plate, and the bottom plate and the side plates may define an accommodating chamber. The housing 11 has an opening communicating with the accommodation chamber, and the cover 13 can be provided on the opening to close the accommodation chamber. The positive electrode, the negative electrode, and the separator may be formed into the electrode assembly 12 through a winding process or a lamination process. The electrode assembly 12 is enclosed within the accommodation chamber. The electrolyte is impregnated into the electrode assembly 12. There may be one or a plurality of electrode assemblies 12 included in the secondary battery 1, and the number may be selected by those skilled in the art according to specific practical requirements.

The electric device includes the secondary battery provided herein. The secondary battery may be used as a power supply for the electric device, or as an energy storage unit for the electric device. The electric apparatus may include, but is not limited to, a mobile device (e.g., a cell phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

FIG. 3 shows an electric device as an example. The electric device is a pure electric vehicle, a hybrid electric vehicle, a plug-in hybrid electric vehicle, or the like. In order to meet the demand for high power and high energy density of the secondary battery by the electric device, a battery pack or a battery module may be used.

In another example, the apparatus may be a cell phone, a tablet computer, a notebook computer, or the like. This electric device is generally required to be thin and lightweight, and may use the secondary battery as the power supply.

## **Examples**

Embodiments of the present application are described below. The embodiments described below are illustrative only and are not to be construed as limiting the present application. In the embodiments, specific techniques or conditions are not indicated, and they are performed according to techniques or conditions described in documents in the art or according to the specification of the product. The reagents or instruments used without specifying the manufacturer(s) are conventional products that are commercially available.

I. Secondary battery

Example 1

(1) Preparation of a silicon-carbon composite material

A gas containing a silicon precursor was provided to carbon matrix particles having a three-dimensional network cross-linked pore structure, and silicon nanoparticles attached to the carbon matrix particles were generated from the silicon precursor by chemical vapor deposition to obtain a silicon-carbon composite material. The silicon precursor is silane, and the carbon matrix is hard carbon.

(2) Preparation of a negative electrode

A silicon-based negative electrode active material (a silicon-carbon composite material), conductive carbon black, sodium carboxymethyl cellulose (CMC) as a thickener, and styrene-butadiene rubber emulsion (SBR) as a binder were mixed at a weight ratio of 96.5: 1.0: 1.0: 1.5 by sufficient stirring in an appropriate amount of deionized water to form a uniform negative electrode slurry, and the negative electrode slurry was applied on a negative current collector, followed by the steps such as drying to obtain a negative electrode.

(3) Preparation of a positive electrode

An 8 $\mu$m thick aluminum foil was used as a positive electrode current collector. $LiNi_{0.8}Co_{0.1}Mn_{0.1}O_2$ ($NCM_{811}$) as a positive electrode active material, conductive carbon black, and polyvinylidene fluoride (PVDF) as a binder were sufficiently stirred and mixed at a weight ratio of 93: 2: 5 in an appropriate amount of a solvent of N-methylpyrrolidone (NMP) to form a uniform positive electrode slurry, and the positive electrode slurry was applied to the surface of a positive current collector, followed by drying, cold pressing, and slitting to obtain a positive electrode.

(4) Preparation of an electrolyte

Ethylene carbonate (EC), ethyl methyl carbonate (DEC), and diethyl carbonate (EMC) were mixed at a volume ratio of 1: 1: 1 to obtain an organic solvent, and sufficiently dried lithium salt LiPF6 was dissolved in the mixed organic solvent to prepare an electrolyte having a concentration of 1 mol/L, and then 30 wt% dimethyl carbonate was added for uniform mixing.

(5) Separator

A porous polyethylene (PE) film was used as a separator.

(6) Preparation of a battery

The positive electrode, the separator, and the negative electrode were stacked in order, so that the separator was disposed between the positive and negative electrodes to function as the separator, and then wound to obtain a bare cell, a tab was welded to the bare cell, and the bare cell was enclosed in an aluminum case and baked at 80°C to remove water, followed by injection of the electrolyte and sealing to obtain an uncharged battery. The uncharged battery was further subjected to steps such as standing, hot and cold pressing, chemical forming, shaping, and capacity testing in order to obtain a lithium-ion battery product of Example 1.

Example 2-5

The preparation methods of the batteries of Examples 2-5 are similar to that of Example 1, except that the mass ratio EL of dimethyl carbonate in the electrolyte is adjusted. Specific parameters are shown in Table 1.

Example 6-9

The preparation methods of the batteries of Examples 6-9 are similar to that of Example 1, except that the mass ratio EL of dimethyl carbonate in the electrolyte and related parameters of the silicon-carbon composite material are adjusted.

Comparative Example 1

The preparation method of the batteries of Comparative Example 1 is similar to that of Example 1, except that dimethyl carbonate is not added into the electrolyte.

Comparative Example 2

The preparation method of the battery of Comparative Example 2 is similar to that of Example 1, except that the pore structure of the carbon matrix particles of Example 2 is a cellular pore structure.

## II. Test method

1. Silicon-carbon composite material

1) Structural characterization of the silicon-carbon composite material

The pore structure of the silicon-carbon composite can be tested using devices and methods known in the art. For example, it can be tested by using a scanning electron microscope (e.g., ZEISS Sigma 300). As an example, it might be tested according to the following steps: the negative electrode including the silicon-carbon composite material was first cut into a sample to be tested of a certain size (for example, 6 mm×6 mm), the sample to be tested was sandwiched between two sheets of electrically and thermally conductive sheets (for example, a copper foil), the sample to be tested and the sheets were adhered and fixed with an adhesive (for example, a double-sided tape), and the sample to be tested was pressed by a flat iron block of a certain mass (for example, about 400 g) for a certain period of time (for example, 1 h), to make the gap between the sample to be tested and the copper foil as small as possible, and then the edge was cut with a pair of scissors and adhered to a sample stage with an electrically conductive adhesive with the sample protruding slightly from the edge of the sample stage. The sample stage was then loaded into a sample holder and locked in place, a power supply of an argon ion section polisher (e.g., IB-19500CP) was turned on and vacuumizing (e.g., 10 Pa to 4 Pa) was performed, an argon flow (e.g., 0.15 MPa) and a voltage (e.g., 8 KV) and polishing time (e.g., 2 h) were set, the sample stage was set to a rocking mode to begin polishing, and after the polishing was complete, a scanning electron microscope (e.g., ZEISS Sigma 300) was used to obtain an ion polished cross-sectional topography (CP) picture of the sample to be tested.

2) Porosity of the silicon-carbon composite material

The anode film layer was taken out after the battery was disassembled, and the binder was removed after the negative electrode film layer was ablated at a high temperature of xxx to obtain a silicon-carbon composite powder. The measurement was carried out according to GB/T24586 by a gas displacement method. Porosity=(V1-V2)/V1* 100%, where V1 is an apparent volume of the sample, and V2 is the true volume of the sample.

3) Specific surface area SSA of the silicon-carbon composite material

The specific surface area was tested by a gas adsorption method according to the test standard of GB/T 19587-2017, specifically as follows: a silicon-carbon composite material was taken as a sample, a sample tube was immersed in liquid nitrogen at -196°C, the adsorption amount of nitrogen gas on the solid surface was tested at different pressures from a relative pressure 0.05-0.30, and the adsorption amount of a monomolecular layer of the sample was determined based on the BET multilayer adsorption theory and its formula, so that the specific surface area of the negative electrode active material was calculated.

The calculation formula for BET is as follows:

$$\frac{P/P_0}{n_a(1 - P/P_0)} = \frac{1}{n_m C} + \frac{C-1}{n_m C} \cdot \frac{P}{P_0}$$

In the formula, $n_a$ is the amount of adsorbed gas with a unit of mol/g, $p/p_0$ is the relative pressure, nm is the adsorption amount of the monomolecular layer, and C represents a revision parameter used to limit the number of adsorbed layers on the adsorbent surface.

4) Pore size of the silicon-carbon composite material

The pore size was tested by the gas adsorption method according to the test standard of GB/T 19587 -2017& GB/T21650.2-2008, specifically as follows: the silicon-carbon composite material was taken as a sample, the sample tube was immersed in liquid nitrogen at -196°C, nitrogen gas was adsorbed on the material to be tested at a relative pressure of 0-1, and the pore size distribution of the porous material was characterized based on a relationship diagram of the volume of each level of pore size versus the corresponding partial pressure.

5) Powder compact density

With reference to GB/T 24533-2009, an electronic pressure testing machine (e.g. UTM7305) is used for testing: a powder sample to be tested with a certain mass G was placed on a specific compaction tool (base area S), different pressures (20000N or 50000N may be used in the present application) were set, the pressure was held for 20 s, the pressure is released for 10 s, the thickness H of the powder at this pressure after powder compaction was read on the device, and the compaction density at this pressure might be calculated, the compaction density of the material at this pressure was equal to G /(H*S).

6) True density of the silicon-carbon composite material

Referring to GB/T 24586-2009, the test instrument may be a true density tester. As an example, it might be tested according to the following steps: a clean dry silicon-carbon composite sample cup was placed on a balance and cleared to zero, an amount of powder sample was added into the sample cup (e.g., the sample may account for 1/2 of the volume of the sample cup), the mass of the sample taken was recorded, the sample cup containing the sample was placed in a true density 25-degree tester for close testing, helium was introduced, the pressures of the gases in the sample chamber and the expansion chamber were detected, the true volume was calculated according to Bohr's law, and thus, the true density was calculated.

7) Characterization of silicon and carbon element distribution in the silicon-carbon composite material

The elemental distribution of the grain cross-section was tested by elemental analysis of the ion polished cross-section elemental analysis according to the test standard GB-T 17359 2012.

2. Electrolyte

1) Conductivity test for the electrolyte

The electrolyte was tested at 25°C using a conductivity meter, and the model of the conductivity tester was Mettler Conductivity Meter S230.

3. Battery performance

1) Cycle capacity retention ratio

At 25°C, the secondary batteries prepared in Examples and Comparative Examples were subjected to the following one charge-discharge cycle: the secondary batteries were charged with a constant-current at a rate of 0.5C to a charge cut-off voltage 4.25V, then charged with a constant-voltage to a current≤0.05C, left to stand for 5 min, and then charged with a constant-current at a rate of 0.33C to a discharge cut-off voltage 2V, and left to stand for 5 min. The batteries were subjected to a cycle charge-discharge test according to this method, and the capacity retention ratios of the lithium ion batteries after 800 cycles were calculated.

2) Cycle capacity retention ratio at a high rate

At 25°C, the secondary batteries prepared in Examples and Comparative Examples were subjected to the following one charge-discharge cycle: the secondary batteries were charged with a constant-current at a rate of 0.5C to a charge cut-off voltage 4.25V, then charged with a constant-voltage to a current≤0.05C, left to stand for 5 min, and then charged with a constant-current at a rate of 0.33C to a discharge cut-off voltage 2V, and left to stand for 5 min. Then, the secondary batteries were charged with a constant current at a rate of 2C to a charge cut-off voltage 4.25V, then discharged with a constant current at a rate of 0.33C to a discharge cut-off voltage 2V, the batteries were subjected to a cycle charge-discharge test according to this method, and the capacity retention ratios of the lithium ion batteries after 800 cycles were calculated.

3. Test for internal resistance of the batteries

At 25 °C, the secondary batteries prepared in the Examples and Comparative examples and the lithium ion batteries cycled for 800 times at a rate of 2C at 25°C were charged at a constant current of 1C to 4.3V. Then, the batteries were charged with a constant voltage of 4.3V till the current was less than 0.05C, and then discharged at 1C for 30 min, i.e., the electric quantities of the batteries were adjusted to 50% SOC. Then, positive and negative writing pens of a TH2523A AC internal resistance tester were contacted with the positive and negative electrodes of the batteries, and the internal resistance values of the batteries were read by the internal resistance tester and recorded as initial battery internal resistance (m Ω) and battery internal resistance (m Ω) after cycles for 800 times, respectively.

### III. Analysis of test results of Examples and Comparative Examples

The secondary batteries of Examples and Comparative examples were respectively prepared according to the above method, and parameters were measured, with results shown in Table 1 below.

Table 1

| Serial No. | Negative electrode active material | Solvent | EL/Vm | EL/SSA | EL/V1 | Capacity retention ratio after 800 cycles (25°C, 0.5C charging rate) | Capacity retention ratio after 800 cycles (25°C, 2C charging rate) | Initial internal resistance (mΩ) | Internal resistance (mΩ) after 800 cycles at high rate |
|---|---|---|---|---|---|---|---|---|---|
| Example 1 | Three-dimensional network crosslinked structure | Dimethyl carbonate | 6 | 0.100 | 50.00 | 52% | 33% | 1062 | 2189 |
| Example 2 | Three-dimensional network crosslinked structure | Dimethyl carbonate | 0.5 | 0.008 | 4.17 | 44% | 25% | 1081 | 2702 |
| Example 3 | Three-dimensional network crosslinked structure | Dimethyl carbonate | 20 | 0.333 | 166.67 | 46% | 26% | 1126 | 2670 |
| Example 4 | Three-dimensional network crosslinked structure | Dimethyl carbonate | 0.1 | 0.002 | 0.83 | 31% | 15% | 1170 | 3052 |
| Example 5 | Three-dimensional network crosslinked structure | Dimethyl carbonate | 25 | 0.417 | 208.33 | 32% | 17% | 1185 | 3099 |
| Example 6 | Three-dimensional network crosslinked structure | Dimethyl carbonate | 6 | 0.050 | 30.00 | 49% | 30% | 1075 | 2517 |
| Example 7 | Three-dimensional network crosslinked structure | Dimethyl carbonate | 6 | 0.250 | 120.0 | 48% | 29% | 1114 | 2555 |

| Serial No. | Negative electrode active material | Solvent | EL/Vm | EL/SSA | EL/V1 | Capacity retention ratio after 800 cycles (25°C, 0.5C charging rate | Capacity retention ratio after 800 cycles (25°C, 2C charging rate | Initial internal resistance (mΩ) | Internal resistance (m Ω) after 800 cycles at high rate |
|---|---|---|---|---|---|---|---|---|---|
| Example 8 | Three-dimensional network crosslinked structure | Dimethyl carbonate | 6 | 0.010 | 10.0 | 33% | 18% | 1152 | 3015 |
| Example 9 | Three-dimensional network crosslinked structure | Dimethyl carbonate | 6 | 0.500 | 200.00 | 35% | 19% | 1169 | 3087 |
| Comparative example 1 | Three-dimensional network crosslinked structure | / | / | / | / | 22% | 6% | 1431 | 3465 |
| Comparative example 2 | Cellular pore structure | Dimethyl carbonate | 6 | 0.100 | 50.00 | 19% | 4% | 1513 | 3601 |

As may be seen from the results of Table 1, the negative electrode active materials of the batteries in Examples 1-9 are the silicon-carbon composite having a three-dimensional network cross-linked pore structure, and the electrolyte includes dimethyl carbonate. Compared with the battery in Comparative Example 1 where the negative electrode active material of the material is the silicon-carbon composite having a three-dimensional network cross-linked pore structure and the electrolyte does not include dimethyl carbonate, the battery in Comparative example 2 where the negative electrode active material of the material is the silicon-carbon composite having a cellular pore structure and the electrolyte includes dimethyl carbonate, The battery in Comparative example 3 where dimethyl carbonate is added, and the battery in Comparative example 4 where dimethyl carbonate is added, the batteries in Examples 1-9 show lower internal resistance, higher cycle capacity retention ratio, and more excellent high-rate charge and discharge performance.

The negative electrode in the Comparative examples is a silicon-carbon composite material having a cellular pore structure, silicon particles are not easily deposited inside the cellular pore structure, and therefore, the mass content of silicon-based particles in the silicon-carbon composite material having a cellular pore structure is as low as 7%, and the silicon element is concentrated on the surface of the composite material, so that it is difficult for the carbon matrix to function to restrict the expansion of the silicon-based particles, and thus, the cycle performance of the battery is poor.

From the comparison between Example 2-3 and Example 4-5, it may be seen that controlling the ratio EL: Vm between the pore volume Vm of the silicon-carbon composite material and the mass ratio EL of dimethyl carbonate in the electrolyte within the range of 0.5-20 can significantly improve the rate performance of the battery while improving the cycle capacity retention ratio of the battery.

It may be seen from Examples 6-9 that controlling the EL: SSA to 0.05-0.25 or the EL: V1 to 30-120 may further improve the cycle performance and the rate performance of the battery.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the implementations without departing from the subject matter of the present application, and other implementations constructed by combining some of the constituent elements in the implementations are also included in the scope of the present application.

## Claims

1. A secondary battery (1), comprising:

   a negative electrode, comprising a silicon-carbon composite material having a three-dimensional network cross-linked pore structure; and
   an electrolyte, comprising dimethyl carbonate.

2. The secondary battery (1) according to claim 1, wherein

   a pore volume per unit mass of the silicon-carbon composite material is Vm, with a unit of $cm^3/g$;
   based on the total mass of the electrolyte, a mass ratio of the dimethyl carbonate in the electrolyte is EL g/g; and
   a ratio EL: Vm between the pore volume Vm of the silicon-carbon composite material and the mass ratio EL of the dimethyl carbonate in the electrolyte is 0.5-20, optionally 2-13.

3. The secondary battery (1) according to claim 2, wherein the pore volume Vm per unit mass of the silicon-carbon composite material is 0.01-0.3 $cm^3/g$, preferably 0.04-0.15 $cm^3/g$.

4. The secondary battery (1) according to any one of claims 1 to 3, wherein based on the total mass of the electrolyte, the mass ratio of the dimethyl carbonate in the electrolyte is EL g/g, a specific surface area of the silicon-carbon composite material is SSA, and EL: SSA is 0.01-0.5, optionally 0.05-0.25.

5. The secondary battery (1) according to any one of claims 1 to 4, wherein the specific surface area SSA of the silicon-carbon composite material is 2-10 $m^2/g$, optionally 3-7 $m^2/g$.

6. The secondary battery (1) according to any one of claims 1 to 5, wherein based on the total mass of the electrolyte, the mass ratio of the dimethyl carbonate in the electrolyte is EL g/g, a total pore volume of pores having a pore diameter less than or equal to 100 nm in the silicon-carbon composite material is V1 $cm^3/g$, and a ratio EL: V1 between the mass ratio EL of the dimethyl carbonate in the electrolyte and the total pore volume V1 of pores having a pore diameter less than or equal to 100 nm in the silicon-carbon composite material is 10-200, optionally 30-120.

7. The secondary cell according to any one of claims 1 to 6, wherein the V1 of the silicon-carbon composite material is $\geq$0.001 cm$^3$/g, optionally 0.005-0.01 cm$^3$/g.

8. The secondary battery (1) according to any one of claims 1 to 7, wherein the silicon-carbon composite material comprises carbon matrix particles, the carbon matrix particles having the three-dimensional network cross-linked pore structure; and silicon nanoparticles, the silicon nanoparticles at least partially embedded into the three-dimensional network cross-linked pore structure of the carbon matrix particles.

9. The secondary battery (1) according to claim 8, wherein a mass ratio of the silicon nanoparticles in the silicon-carbon composite material is greater than or equal to 40%, optionally 40-60%.

10. The secondary battery (1) according to claim 8 or 9, wherein the silicon nanoparticles comprise one or more of a silicon oxide compound, amorphous silicon, crystalline silicon, and a silicon-carbon composite.

11. The secondary battery (1) according to any one of claims 8 to 10, wherein the carbon matrix comprises one or more of graphite, soft carbon, and hard carbon.

12. The secondary battery (1) according to any one of claims 8 to 11, wherein the total volume of pores having a pore diameter greater than 100 nm in the carbon matrix particles is denoted by Vc1 cm$^3$/g, the total volume of pores having a pore diameter less than or equal to 100 nm in the carbon matrix particles is denoted by Vc2 cm$^3$/g, the carbon matrix particles satisfy: 1<Vc2/Vc1$\leq$30, optionally 3$\leq$Vc2/Vc1$\leq$25.

13. The secondary battery (1) according to any one of claims 1 to 12, wherein a ratio of a powder compact density P11 g/cm$^3$ of the silicon-carbon composite material tested after powder compaction for one time under an acting force of 20,000 N to a compact density P21 g/cm$^3$ of the silicon-carbon composite material tested after powder compaction for 20 times at an acting force of 20,000 N satisfies 1.00<P21/P11$\leq$1.20, optionally 1.02$\leq$P21/P11$\leq$1.10.

14. The secondary battery (1) according to any one of claims 1 to 12, wherein the powder compact density P11 g/cm$^3$ of the silicon-carbon composite material tested after powder compaction for one time under the acting force of 20,000 N satisfies 1.10$\leq$P11$\leq$1.40, optionally 1.12$\leq$P11$\leq$1.35.

15. The secondary battery (1) according to any one of claims 1 to 14, wherein a conductivity of the electrolyte is 8-12 ms/cm, optionally 9-11 ms/cm.

16. The secondary battery (1) according to any one of claims 1 to 15, wherein the secondary battery (1) comprises at least one of a lithium ion battery, a sodium ion battery, a magnesium ion battery, and a potassium ion battery.

17. An electrical device, comprising the secondary battery (1) according to any one of claims 1 to 16.

FIG. 1

FIG. 2

FIG. 3

## INTERNATIONAL SEARCH REPORT

| International application No. |
|---|
| **PCT/CN2023/085564** |

**A. CLASSIFICATION OF SUBJECT MATTER**

H01M4/36(2006.01)i; H01M4/134(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; ENTXT; ENTXTC; DWPI; CNKI: 硅, 网络, 碳, 硅碳, 碳酸二甲酯, DMC, 孔, 多孔, 体积, cm3/g, cc/g, ml/g, 表面积, 压实密度, silicon, network, carbon, dimethyl carbonate, pore, porous, volume, surface, area, compacted, density

**C. DOCUMENTS CONSIDERED TO BE RELEVANT**

| Category* | Citation of document, with indication, where appropriate, of the relevant passages | Relevant to claim No. |
|---|---|---|
| X | CN 111146430 A (MAANSHAN KEDA PURUI ENERGY TECHNOLOGY CO., LTD. et al.) 12 May 2020 (2020-05-12) description, paragraphs 4-85, and figure 1 | 1, 4-17 |
| Y | CN 111146430 A (MAANSHAN KEDA PURUI ENERGY TECHNOLOGY CO., LTD. et al.) 12 May 2020 (2020-05-12) description, paragraphs 4-85, and figure 1 | 2-3 |
| X | CN 106876665 A (SUZHOU INSTITUTE OF NANO-TECH AND NANO-BIONICS, CHINESE ACADEMY OF SCIENCES) 20 June 2017 (2017-06-20) description, paragraphs 8-86, and figures 1-5 | 1, 6-12, 15-17 |
| Y | CN 106876665 A (SUZHOU INSTITUTE OF NANO-TECH AND NANO-BIONICS, CHINESE ACADEMY OF SCIENCES) 20 June 2017 (2017-06-20) description, paragraphs 8-86, and figures 1-5 | 2-3 |
| X | CN 110707288 A (BEIJING INSTITUTE OF TECHNOLOGY) 17 January 2020 (2020-01-17) description, paragraphs 4-98, and figures 1-2 | 1, 6-12, 15-17 |

☑ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 October 2023** | **21 December 2023** |

| Name and mailing address of the ISA/CN | Authorized officer |
|---|---|
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/085564**

### C.    DOCUMENTS CONSIDERED TO BE RELEVANT

| Category* | Citation of document, with indication, where appropriate, of the relevant passages | Relevant to claim No. |
|---|---|---|
| Y | CN 110707288 A (BEIJING INSTITUTE OF TECHNOLOGY) 17 January 2020 (2020-01-17) <br> description, paragraphs 4-98, and figures 1-2 | 2-3 |
| Y | CN 103840140 A (TSINGHUA UNIVERSITY et al.) 04 June 2014 (2014-06-04) <br> description, paragraphs 6-68 | 2-3 |
| A | CN 114051663 A (NINGDE AMPEREX TECHNOLOGY LTD.) 15 February 2022 (2022-02-15) <br> entire document | 1-17 |
| A | US 2016254537 A1 (SHIN-ETSU CHEMICAL CO., LTD.) 01 September 2016 (2016-09-01) <br> entire document | 1-17 |

Form PCT/ISA/210 (second sheet) (July 2022)

## INTERNATIONAL SEARCH REPORT
### Information on patent family members

International application No.

**PCT/CN2023/085564**

| Patent document cited in search report | | | Publication date (day/month/year) | Patent family member(s) | | | Publication date (day/month/year) |
|---|---|---|---|---|---|---|---|
| CN | 111146430 | A | 12 May 2020 | None | | | |
| CN | 106876665 | A | 20 June 2017 | None | | | |
| CN | 110707288 | A | 17 January 2020 | None | | | |
| CN | 103840140 | A | 04 June 2014 | None | | | |
| CN | 114051663 | A | 15 February 2022 | None | | | |
| US | 2016254537 | A1 | 01 September 2016 | EP | 3062371 | A1 | 31 August 2016 |
| | | | | EP | 3062371 | B1 | 28 November 2018 |
| | | | | US | 10446837 | B2 | 15 October 2019 |

Form PCT/ISA/210 (patent family annex) (July 2022)